# EUROPEAN PATENT APPLICATION

(11) **EP 4 105 947 A1**
(43) Date of publication of application: **21.12.2022**
(21) Application number: 22178973.8
(22) Date of filing: 14.06.2022
(51) Int. Cl.: H01B 7/08

(54) **SHIELDED FLAT ELECTRICAL CONDUCTOR ASSEMBLY**

(30) Priority: 18.06.2021 US 202163212255 P; 10.06.2022 US 202217837346
(71) Applicant: Aptiv Technologies Limited, St. Michael, 14004 (BB)
(72) Inventor: BOHAN, Andrew, Tallmadge, 44278 (US); PETERSON, David R., Aurora, 44202 (US); SUDIK, Joseph, Niles, 48034 (US); DURSE, Nicholas A., Youngstown, 44511 (US)
(74) Representative: Westphal, Mussgnug & Partner, Patentanwälte mbB

(57) **Abstract**

The shielded electrical conductor assembly described herein includes an electrical conductor having a rectangular cross-section, a first insulative layer surrounding the electrical conductor, a conductive layer surrounding the first insulative layer, and a second insulative layer encasing the conductive layer.

## Description

This patent application is directed to a flat electrical conductor assembly that includes electromagnetic shielding and is suitable for high voltage applications.

High current/high voltage electrical power distribution in electric vehicles is commonly accomplished through the use of insulated, stranded, and bunched copper or aluminum cable. Cable cross sections lengths vary, dependent on specific current carrying requirements and applications. Common materials used to insulate the metallic cables are thermoplastic materials, e.g., polyvinyl chloride, NYLON, etc., which are generally applied to the cables using extrusion processes.

Many high power distribution applications require shielding to prevent/reduce electromagnetic emissions (EMI). This shielding is typically accomplished by employing a woven stranded sheathing/braid surrounding the insulated conductor around the cable. In some cases, a thin aluminized polyester film, e.g., MYLAR film, is wrapped around the woven copper wire sheathing/braid for additional higher frequency shielding.

The cables are mechanically and electrically connected to power sources and loads using metallic terminals. These terminals are generally welded or crimped to the cable and are designed in a variety of shapes and sizes to accommodate specific space, current carrying, and metal compatibility requirements. The terminals are collated, indexed, and secured into plastic connectors to facilitate vehicle assembly.

High power cables often require additional components, typically formed of plastic materials, to facilitate conductor routing, attachment, and protection. High power cables have high material costs and require a high degree of capital investment in processing equipment.

Due to the size and rigidity of the power cables, packaging, shipment, and vehicle installation techniques are inefficient, time consuming and thereby more costly.

According to one or more aspects of the present disclosure, a shielded electrical conductor assembly includes an electrical conductor having a rectangular cross-section, a first insulative layer surrounding the electrical conductor, a conductive layer surrounding the first insulative layer, and a second insulative layer encasing the conductive layer.

In one or more embodiments of the shielded electrical conductor assembly according to the previous paragraph, a cross-sectional area of the electrical conductor is in a range of 2 to 12 square millimeters.

In one or more embodiments of the shielded electrical conductor assembly according to any one of the previous paragraphs, a cross-sectional ratio of width to height of the electrical conductor is in a range of 50:1 to 75:1.

In one or more embodiments of the shielded electrical conductor assembly according to any one of the previous paragraphs, a material forming the electrical conductor is a copper-based material or an aluminum-based material.

In one or more embodiments of the shielded electrical conductor assembly according to any one of the previous paragraphs, materials forming the first insulative layer and the second insulative layer is a polyethylene terephthalate material or a polyethylene naphthalate material.

In one or more embodiments of the shielded electrical conductor assembly according to any one of the previous paragraphs, the shielded electrical conductor assembly includes a pair of the electrical conductors.

In one or more embodiments of the shielded electrical conductor assembly according to any one of the previous paragraphs, a first electrical conductor in the pair of the electrical conductors is stacked on top of a second electrical conductor in the pair of electrical conductors.

In one or more embodiments of the shielded electrical conductor assembly according to any one of the previous paragraphs, a thickness of the first insulative layer in a region between the pair of electrical conductors is reduced in comparison to a thickness of a remaining portion of the first insulative layer.

In one or more embodiments of the shielded electrical conductor assembly according to any one of the previous paragraphs, the first insulative layer surrounds a first electrical conductor in the pair of electrical conductors and a second electrical conductor in the pair of electrical conductors.

In one or more embodiments of the shielded electrical conductor assembly according to any one of the previous paragraphs, the first insulative layer surrounds a first electrical conductor in the pair of electrical conductors. The shielded electrical conductor assembly further includes a third insulative layer surrounding a second electrical conductor in the pair of electrical conductors.

In one or more embodiments of the shielded electrical conductor assembly according to any one of the previous paragraphs, a material forming the third insulative layer is a polyethylene terephthalate material or a polyethylene naphthalate material.

In one or more embodiments of the shielded electrical conductor assembly according to any one of the previous paragraphs, the pair of electrical conductors is a first pair of electrical conductors. The shielded electrical conductor assembly further includes a second pair of electrical conductors having a cross-sectional area at least 50% smaller than a cross-sectional area of the first pair of electrical conductors.

In one or more embodiments of the shielded electrical conductor assembly according to any one of the previous paragraphs, the second pair of electrical conductors is located outboard of one electrical conductor in the first pair of electrical conductors.

In one or more embodiments of the shielded electrical conductor assembly according to any one of the previous paragraphs, a first electrical conductor of the second pair of electrical conductors is located outboard of a first electrical conductor in the first pair of electrical conductors and a second electrical conductor of the second pair of electrical conductors is located outboard of a second electrical conductor in the first pair of electrical conductors.

In one or more embodiments of the shielded electrical conductor assembly according to any one of the previous paragraphs, the conductive layer surrounds the first pair of electrical conductors and the second pair of electrical conductors.

In one or more embodiments of the shielded electrical conductor assembly according to any one of the previous paragraphs, the conductive layer surrounds the first pair of electrical conductors but not the second pair of electrical conductors.

In one or more embodiments of the shielded electrical conductor assembly according to any one of the previous paragraphs, a thickness of the first insulative layer in a region between the first pair of electrical conductors and the second pair of electrical conductors is reduced in comparison to a thickness of a remaining portion of the first insulative layer.

In one or more embodiments of the shielded electrical conductor assembly according to any one of the previous paragraphs, the second pair of electrical conductors are part of a high voltage interlock circuit.

In one or more embodiments of the shielded electrical conductor assembly according to any one of the previous paragraphs, a portion of the shielded electrical conductor assembly is formed to have a shape that is an undulating shape, a wavy shape, a rippled shape, a pleated shape or an accordion shape.

In one or more embodiments of the shielded electrical conductor assembly according to any one of the previous paragraphs, the shielded electrical conductor assembly has a shape that is a generally straight shape, generally L-shaped, and generally T-shaped.

The present invention will now be described, by way of example with reference to the accompanying drawings, in which:
Fig. 1 is a perspective view of a shielded electrical conductor assembly according to some embodiments;
Fig. 2 is a partial cross-section view of the shielded electrical conductor assembly of Fig. 1 according to some embodiments;
Fig. 3 is a perspective view of a shielded electrical conductor according to some embodiments;
Fig. 4 is a perspective view of the shielded electrical conductor of Fig. 3 with one section folded over another according to some embodiments;
Fig. 5 is a cross section of a shielded electrical conductor including additional signal conductors according to some embodiments;
Fig. 6 is a cross section of a shielded electrical conductor including additional signal conductors in an alternative configuration to Fig. 5 according to some embodiments;
Fig. 7 is a cross section of a shielded electrical conductor with the conductive layer in an alternative configuration to Fig. 2 according to some embodiments;
Fig. 8 is a cross section of a shielded electrical conductor including additional signal conductors with the conductive layer in an alternative configuration to Fig. 5 according to some embodiments;
Fig. 9 is a cross section of a shielded electrical conductor including additional signal conductors with the first insulative layer in an alternative configuration to Fig. 8 according to some embodiments;
Fig. 10 is a cross section of a shielded electrical conductor including additional signal conductors with the conductive layer in an alternative configuration to Fig. 8 according to some embodiments;
Fig. 11 is a perspective view of an alternative shielded electrical conductor assembly having a portion of the shielded electrical conductor that is formed to have a shape that has an undulating shape, a wavy shape, a rippled shape, a pleated shape and an accordion shape according to some embodiments;
Fig. 12 is a partial perspective view of an apparatus configured to have a shape that has an undulating shape, a wavy shape, a rippled shape, a pleated shape and an accordion shape according to some embodiments;
Fig. 13 is a transparent view of the apparatus of Fig. 12 according to some embodiments;
Fig. 14 a perspective view of an alternative shielded electrical conductor that is generally L-shaped according to some embodiments;
Fig. 15 is an alternative perspective view of the shielded electrical conductor of Fig. 14 according to some embodiments;
Fig. 16 a perspective view of an alternative shielded electrical conductor that is generally T-shaped according to some embodiments;
Fig. 17 is a perspective view of another shielded electrical conductor assembly according to some embodiments;
Fig. 18 is a cross-section view of the shielded electrical conductor assembly of Fig. 17 according to some embodiments; and
Fig. 19 is a cross-section view of the shielded electrical conductor assembly of Fig. 17 according to some other embodiments.

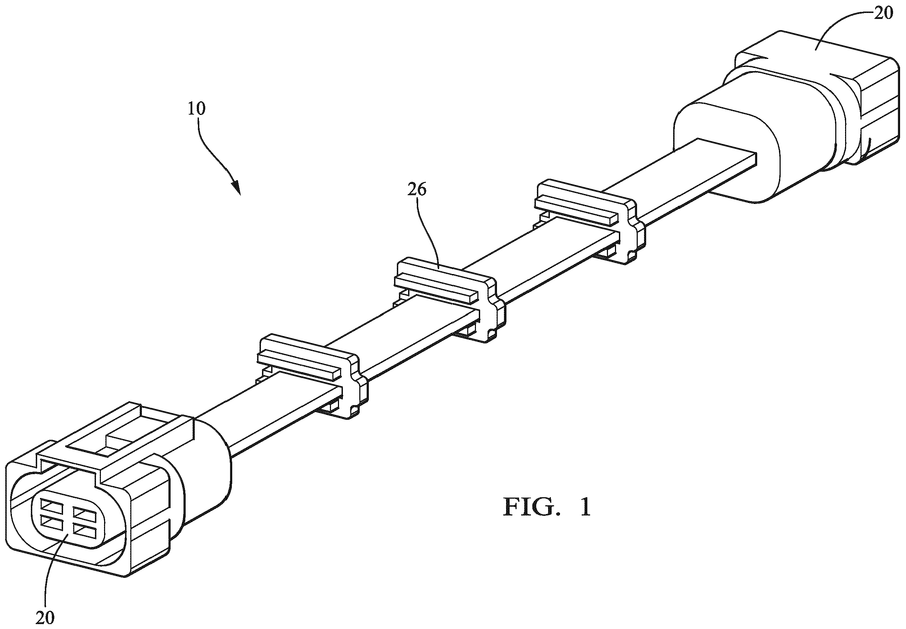

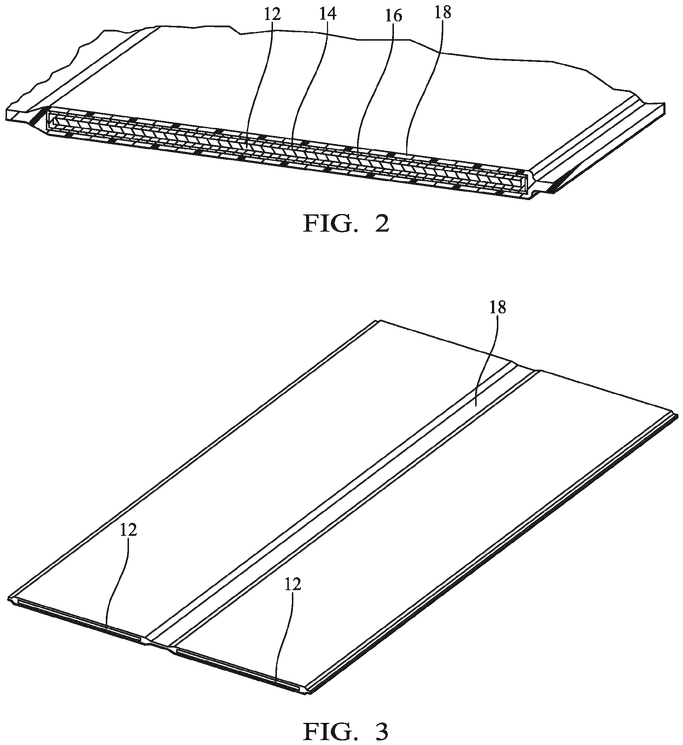

A shielded electrical conductor assembly, hereinafter referred to as the assembly 10 is presented herein. Non-limiting examples of the assembly 10 are shown in Figs. 1-10. As shown in Fig. 2, the assembly 10 includes thin (stacked or adjacent) conductor(s), i.e., conductor strips 12, that are formed from a copper or aluminum sheet and have a generally rectangular cross section. The conductor strips 12 may be arranged in a single or a multiple/layered configuration. The conductor strips 12 have a rectangular cross section which have has a larger surface area than round conductors having the same cross-sectional area. The larger surface area of the conductor strips 12 improves the heat dissipation rate from the assembly. This allows the conductor strips 12 to carry the same current as a round conductors with a larger cross-sectional area and still met a given maximum temperature-rise requirement. This provides a reduction in the conductive material, e.g., copper or aluminum, required to form the rectangular conductor strips 12, thereby reducing material costs.

The number of conductor strips 12 in the assembly is dependent on electrical design requirements, e.g., current, voltage, electrical resistance per unit length, desired heat dissipation rate, etc. The thickness of the conductor strips 12 is generally, but not limited, the range of 0.200 mm to 0.400 mm thick. The width of the conductor strips 12 is generally, but not limited to the range of 10 mm to 30 mm.

As illustrated in Fig. 2, the individual conductor strips are insulated by a first layer 14 of dielectric laminate that are made of a thin thermoplastic (PEN, PET, etc.) film surrounding the conductor strips to electrically insulate the conductor strips while providing a low cost, highly efficient heat transfer medium.

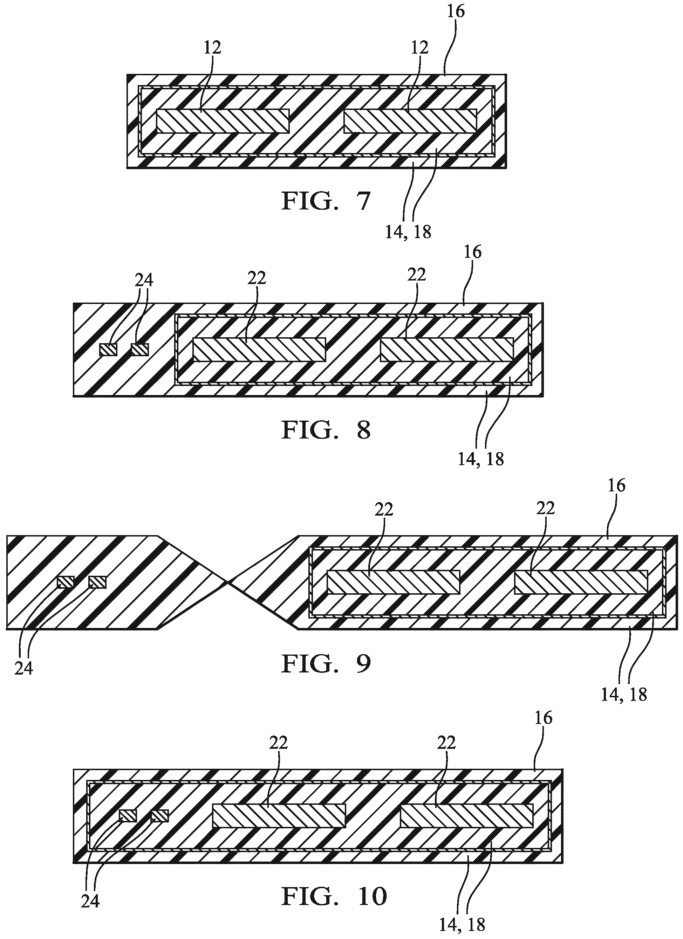

As also shown in Fig. 2, a shield conductor 16 is added to the assembly to provide electromagnetic shielding. The shield conductor 16 may be a conductive layer of a thin aluminized polyester film, e.g., MYLAR film, surrounding the first insulative layer 14. Multiple shield conductors 16 may individually surround each conductor strip 12 as shown in Fig. 3 or a single shield conductor 16 may surround multiple conductor strips 12 as shown in Fig. 7.

The shield conductors 16 are insulated by a second layer 18 of dielectric laminate that is made of a thin thermoplastic film (PEN, PET, etc.) surrounding the shield conductors 16 to electrically insulate the shield conductors 16 while providing a low cost, highly efficient heat transfer medium.

The modular configuration of the assembly 10 allows for a connector 20 terminating the shielded electrical conductor assembly to have multiple terminations for the same conductor strip 12, thereby enabling a multi-terminal termination of the conductor strip 12.

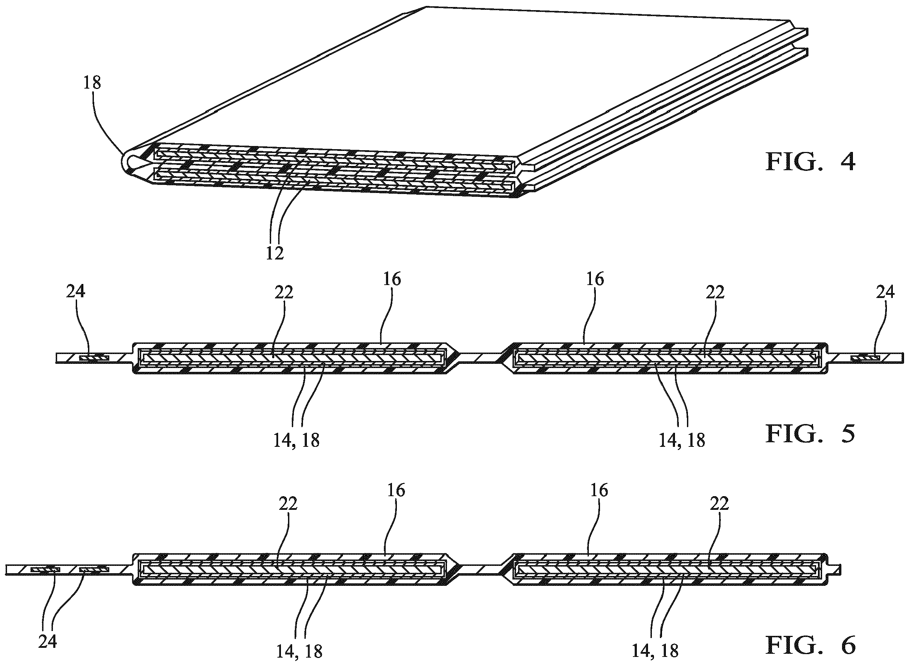

In an application electrically connecting a heat pump or other auxiliary type connections, this can result in a 2- or 4-way terminal connector, potentially more in some applications. As shown in Figs. 3 and 4, the conductor strips 12 may be arranged in a side-by-side configuration and then folded one on top of the other to reduce the overall width of the assembly 10. A section of the first layer 14 of dielectric laminates may have a reduced thickness to facilitate folding the assembly. Adding a second conductor strip 12 can increase the current carrying ability of the assembly 10 by 80% or more, by either adding to the amount of conductor material to carry more current through conductor strips 12 in series or packaging more conductor strips 12 to be ran in parallel. Running the separate conductor strips 12 in parallel would allow for wider conductor(s) in each conductor strip 12 for a given packaging width.

The conductor strip 12 shape is dependent on specific design requirements but can be fashioned in a manner that allows the formation of an integral terminal, e.g., a male blade terminal. Other component terminal fixations are possible for both the conductor(s) and shield(s) as required.

The terminals are collated, indexed, and secured into the plastic connectors 20 as shown in Fig. 1, to facilitate electrical connection and vehicle assembly. Depending on design requirements, the assembly 10 can contain both power circuits 22 and signal circuits 24 as shown in Figs. 5-6 and 8-10. These signal circuits 24 may have a smaller cross section that the power circuits 22 and can be shielded or unshielded and may be arranged in multiple configurations.

Additional plastic components 26 illustrated in Fig. 1 may be added to the assembly for cable routing and attachment to the vehicle.

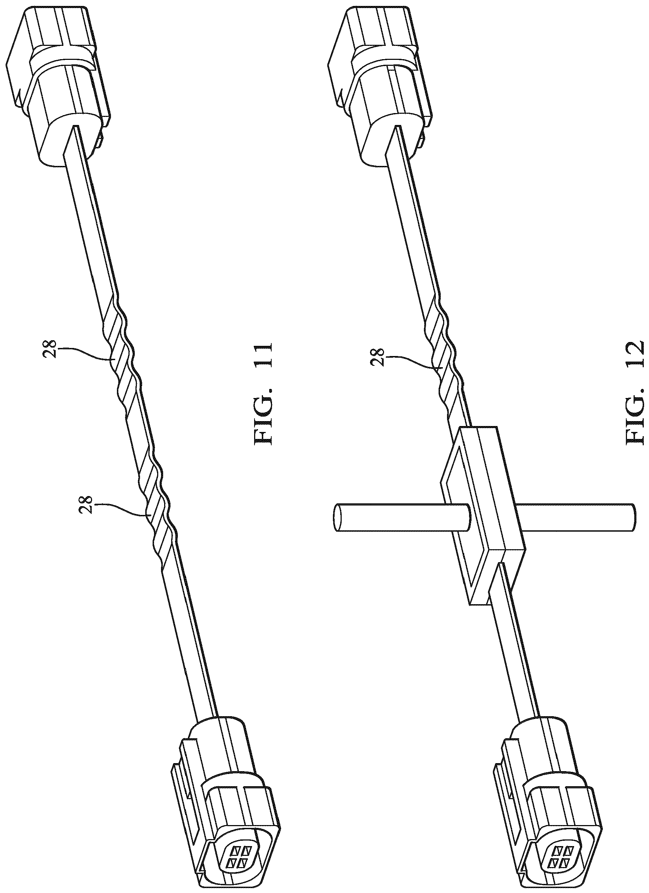

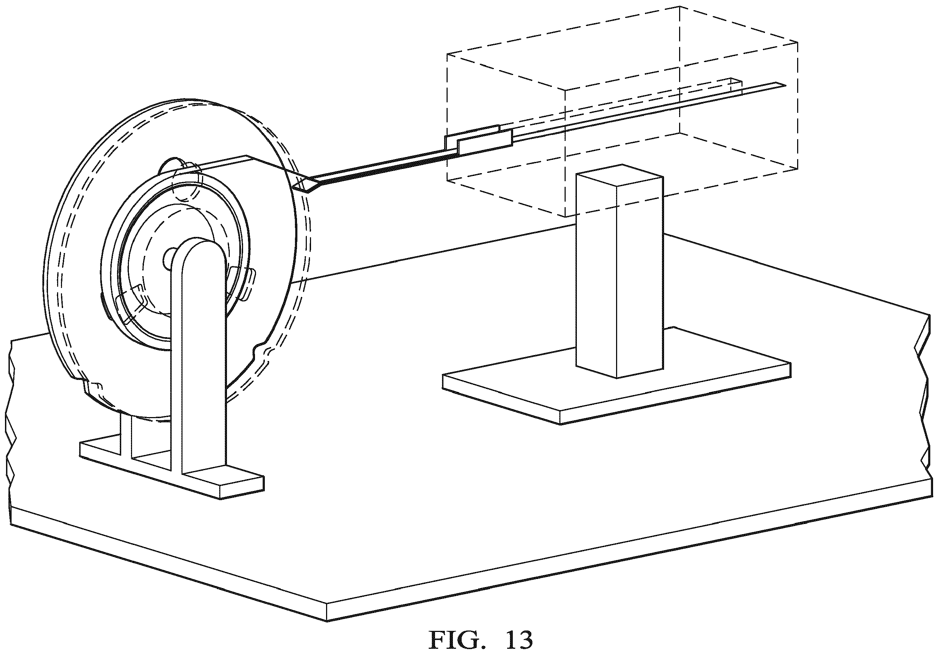

Undulating, wavy, rippled, pleated, or accordion shaped features 28, as shown in Fig. 11 can be formed into the assembly 10 to provide vibration dampening and allow for thermal expansion and/or extension of the assembly 10 needed to make electrical connections. Figs. 12 and 13 illustrate tools that are configured to for these Undulating, wavy, rippled, pleated, or accordion shaped features 28.

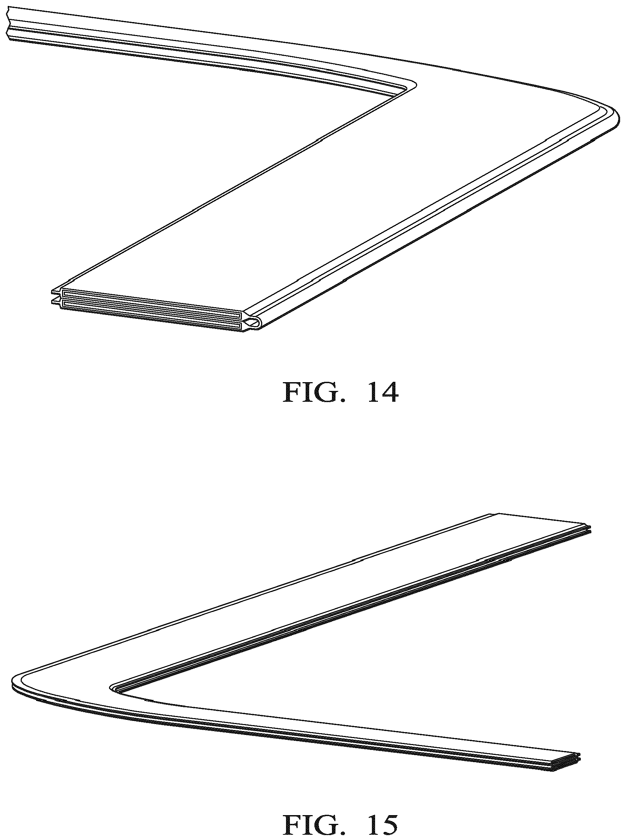

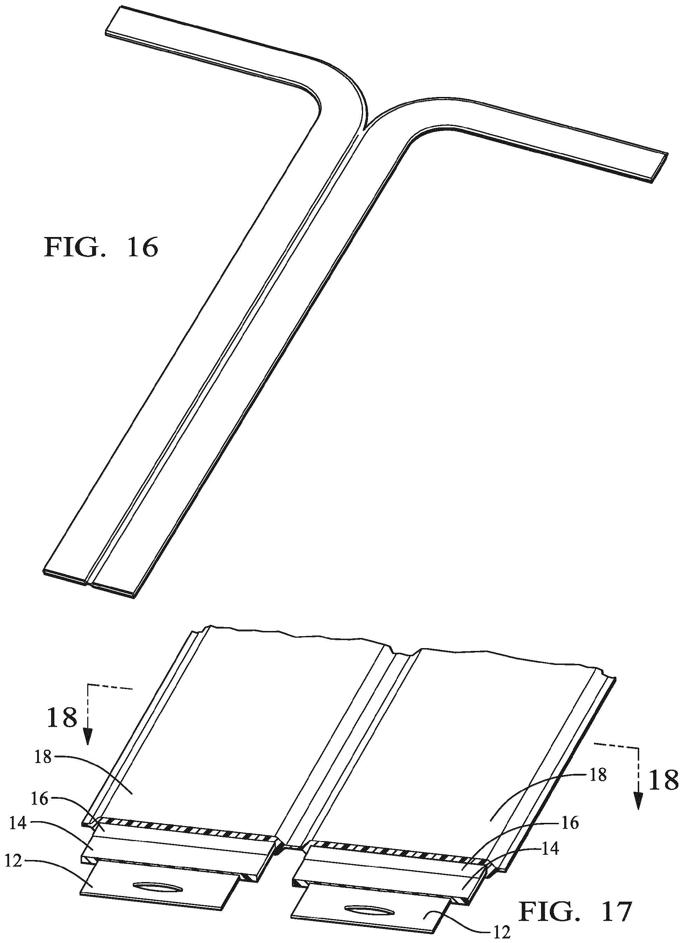

In addition to the straight configuration of the assembly shown in Figs. 1-12, the assembly may be formed in a L-shape as shown in Figs. 14 and 15 or a T-shape as shown in Fig. 16. Alternatively, the assembly may be strategically slit to provide some degree of bending/twisting flexibility in the assembly.

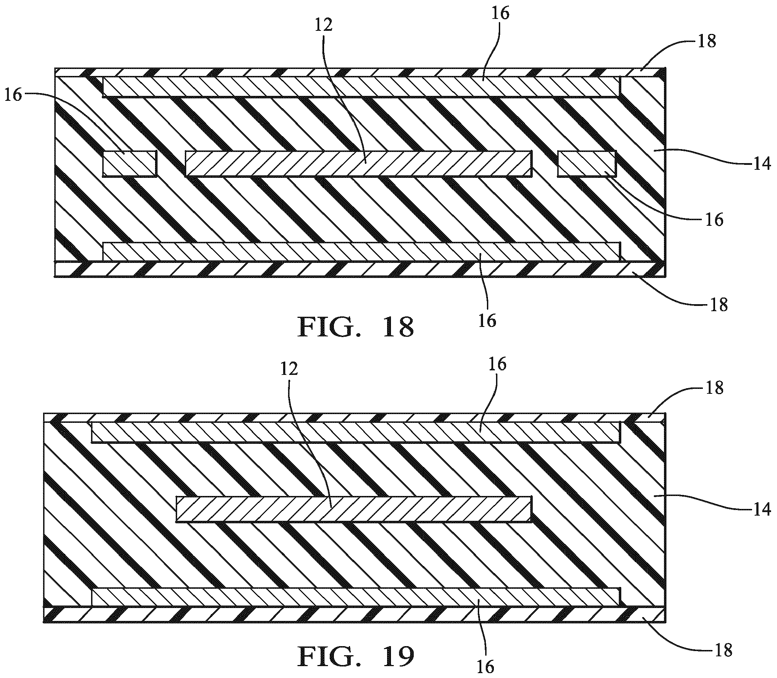

Figs. 17 to 19 illustrate yet another example of the assembly 10 having conductor strips 12 that are insulated by a first layer 14 of dielectric laminate. As shown in Fig. 18, the assembly 10 includes two separate shield conductors 16 outside the first layer 14 of dielectric laminate that overlap the conductor strips 12 and two more separate shield conductors 16 that flank the conductor strips 12. The shield conductors 16 are all tied to a common ground potential. As shown in Fig. 18, the assembly 10 includes two separate shield conductors 16 that overlap the conductor strips 12 but the flanking shield conductors are eliminated. The overlapping shield conductors 16 may extend past the conductor strips 12 by about 10% of the width of the conductor strips 12. The shield conductors 16 are insulated by a second layer 18 of dielectric laminate film surrounding the shield conductors 16.

The assembly 10 has a lighter weight compared to equivalent traditional round conducot4r wiring assemblies. The lighter weight of the assembly 10 also provides material cost savings. The assembly 10 is also simple to manufacture and so expensive tooling is not needed. In addition, vehicle installation is markedly simplified due to the assembly's lighter weight and flexibility.

While the embodiments of the assembly 10 described herein are directed for use in an electric vehicle, other embodiments may be envisioned for use in other purposes, such as industrial machines, building wiring, and many other high current/high voltage applications.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a situation or material to the teachings of the invention without departing from its scope. Dimensions, types of materials, orientations of the various components, and the number and positions of the various components described herein are intended to define parameters of certain embodiments and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any order of operations, direction or orientation unless stated otherwise.

## Claims

1. A shielded electrical conductor assembly (10), comprising:
an electrical conductor (12) having a rectangular cross-section;
a first insulative layer (14) surrounding the electrical conductor (12);
a conductive layer (16) surrounding the first insulative layer (14); and
a second insulative layer (18) encasing the conductive layer (16).

2. The shielded electrical conductor assembly (10) according to claim 1, wherein a cross-sectional area of the electrical conductor (12) is in a range of 2 to 12 square millimeters.

3. The shielded electrical conductor assembly (10) according to claim 1 or 2, wherein a cross-sectional ratio of width to height of the electrical conductor (12) is in a range of 50:1 to 75:1.

4. The shielded electrical conductor assembly (10) according to any one of the preceding claims, wherein a material forming the electrical conductor (12) is selected from a list consisting of a copper-based material and an aluminum-based material.

5. The shielded electrical conductor assembly (10) according to any one of the preceding claims, wherein materials forming the first insulative layer (14) and the second insulative layer (18) are selected from a list consisting of a polyethylene terephthalate material and a polyethylene naphthalate material.

6. The shielded electrical conductor assembly (10) according to any one of the preceding claims, wherein the shielded electrical conductor assembly (10) comprises a pair of the electrical conductors (12).

7. The shielded electrical conductor assembly (10) according to claim 6, wherein a first electrical conductor (12) in the pair of the electrical conductors (12) is stacked on top of a second electrical conductor (12) in the pair of electrical conductors (12).

8. The shielded electrical conductor assembly (10) according to claim 6 or 7, wherein a thickness of the first insulative layer (14) in a region between the pair of electrical conductors (12) is reduced in comparison to a thickness of a remaining portion of the first insulative layer (14).

9. The shielded electrical conductor assembly (10) according to any one of claims 6 to 8, wherein the conductive layer (16) surrounds a first electrical conductor (12) in the pair of electrical conductors (12) and a second electrical conductor (12) in the pair of electrical conductors (12).

10. The shielded electrical conductor assembly (10) according to any one of claims 6 to 9, wherein the conductive layer (16) surrounds a first electrical conductor (12) in the pair of electrical conductors (12) and wherein the shielded electrical conductor assembly (10) further comprises a third insulative layer surrounding a second electrical conductor (12) in the pair of electrical conductors (12).

11. The shielded electrical conductor assembly (10) according to any one of claims 6 to 10, wherein the pair of electrical conductors (12) is a first pair of electrical conductors (22) and wherein the shielded electrical conductor assembly (10) further comprises a second pair of electrical conductors (24) having a cross-sectional area at least 50% smaller than a cross-sectional area of the first pair of electrical conductors (12).

12. The shielded electrical conductor assembly (10) according to claim 11, wherein the second pair of electrical conductors (24) is located outboard of one electrical conductor (22) in the first pair of electrical conductors (12).

13. The shielded electrical conductor assembly (10) according to claim 11 or 12, wherein a first electrical conductor (24) of the second pair of electrical conductors (24) is located outboard of a first electrical conductor (22) in the first pair of electrical conductors (22) and a second electrical conductor (24) of the second pair of electrical conductors (24) is located outboard of a second electrical conductor (22) in the first pair of electrical conductors (22).

14. The shielded electrical conductor assembly (10) according to any one of claims 11 to 13, wherein a thickness of the first insulative layer (14) in a region between the first pair of electrical conductors (22) and the second pair of electrical conductors (24) is reduced in comparison to a thickness of a remaining portion of the first insulative layer (14).

15. The shielded electrical conductor assembly (10) according to any one of the preceding claims, wherein a portion of the shielded electrical conductor assembly (10) is formed to have a shape selected from a list consisting of an undulating shape, a wavy shape, a rippled shape, a pleated shape, an accordion shape, a straight shape, an L-shape, and a T-shape.
